# EUROPEAN PATENT APPLICATION

(11) **EP 4 432 759 A1**
(43) Date of publication of application: **18.09.2024**
(21) Application number: 22892531.9
(22) Date of filing: 20.10.2022
(51) Int. Cl.: H04W 72/0446, H04W 72/1268, H04W 28/16

(54) **BASE STATION APPARATUS, COMMUNICATION DEVICE, COMMUNICATION SYSTEM, AND COMMUNICATION METHOD**

(30) Priority: 09.11.2021 JP 2021182640
(71) Applicant: Sony Group Corporation, Tokyo 108-0075 (JP)
(72) Inventor: KUSUMOTO, Mitsuru, Tokyo 108-0075 (JP)
(74) Representative: D Young & Co LLP
(86) International application number: PCT/JP2022/039088
(87) International publication number: WO 2023/085031

(57) **Abstract**

A base station apparatus (20) includes a communication unit (21) and a control unit (24). The communication unit (21) performs uplink communication with a communication device (40). The control unit (24) acquires a notification that an amount of data stored in a transmission buffer of the communication device (40) is equal to or less than a predetermined amount. When acquiring the notification, the control unit (24) allocates resources for the communication device (40) to transmit a signal for a certain period of time, to the communication device (40).

## Description

### Field

The present disclosure relates to a base station apparatus, a communication device, a communication system, and a communication method.

### Background

Development of high-speed communication networks has promoted real-time distribution of events such as live concerts. For example, a communication device having an image capturing function captures performance such as a live concert, and uploads captured video data and audio data to a network via a base station. The communication device stores transmission data such as the video data and audio data in a transmission buffer, and transmits the transmission data to the base station according to uplink scheduling in the base station.

### Citation List

### Patent Literature

Patent Literature 1: JP 2019-522933 A

### Summary

### Technical Problem

Here, for example, when the transmission buffer of the communication device is empty, that is, when the buffer temporarily has no data to be transmitted by the communication device, the base station stops allocating resources to the communication device. When the scheduling of the resources is requested from the communication device next, the base station restarts the allocation of the resources to the communication device.

In this way, the communication device needs to interact with the base station after the transmission buffer becomes empty and before restarting next uplink transmission. As described above, there is a problem that a delay occurs until the communication device restarts the uplink transmission.

Therefore, the present disclosure provides a mechanism that is configured to further reduce a delay before the communication device restarts uplink transmission.

Note that the above problem or object is merely one of a plurality of problems or objects that a plurality of embodiments disclosed herein can solve or achieve. Solution to Problem

A base station apparatus of the present disclosure includes a communication unit and a control unit. The communication unit performs uplink communication with a communication device. The control unit acquires a notification that an amount of data stored in a transmission buffer of the communication device is equal to or less than a predetermined amount. When acquiring the notification, the control unit allocates resources for the communication device to transmit a signal for a certain period of time, to the communication device.

### Brief Description of Drawings

FIG. 1 is a diagram illustrating an exemplary entire configuration of a communication system according to an embodiment of the present disclosure.
FIG. 2 is a sequence diagram illustrating an example of uplink communication performed between a base station apparatus and a terminal device.
FIG. 3 is a table illustrating an example of parameters for the uplink communication performed between the base station apparatus and the terminal device.
FIG. 4 is a diagram illustrating an exemplary configuration of the base station apparatus according to an embodiment of the present disclosure.
FIG. 5 is a diagram illustrating an exemplary configuration of the terminal device according to an embodiment of the present disclosure.
FIG. 6 is a sequence diagram illustrating an example of uplink communication performed between the base station apparatus and the terminal device according to an embodiment of the present disclosure.
FIG. 7 is a table illustrating an example of parameters for the uplink communication performed between the base station apparatus and the terminal device according to an embodiment of the present disclosure.
FIG. 8 is a diagram illustrating an example of uplink communication performed in the communication system according to an embodiment of the present disclosure.
FIG. 9 is a sequence diagram illustrating an establishment process of establishing a default bearer for normal communication according to an embodiment of the present disclosure.
FIG. 10 is a sequence diagram illustrating an establishment process of establishing a default bearer for real-time communication according to an embodiment of the present disclosure.
FIG. 11 is a sequence diagram illustrating an establishment process of establishing a default bearer and a dedicated bearer for real-time communication according to an embodiment of the present disclosure.
FIG. 12 is a flowchart illustrating an example of a communication process according to an embodiment of the present disclosure.

### Description of Embodiments

Embodiments of the present disclosure will be described in detail below with reference to the accompanying drawings. Note that in the present description and the drawings, component elements having substantially the same functional configurations are denoted by the same reference numerals, and redundant descriptions thereof will be omitted.

In addition, in the present description and the drawings, similar component elements of the embodiments are distinguished by giving the same reference numerals followed by different alphabets or numerals in some cases. However, when there is no need to particularly distinguish the plurality of similar component elements, the component elements are denoted by the same reference numeral alone.

One or a plurality of embodiments (including examples and modifications) described below can be implemented independently. Meanwhile, at least some of the plurality of embodiments described below may be implemented by being appropriately combined with at least some of the other embodiments. The plurality of embodiments can include novel features different from each other. Therefore, the plurality of embodiments can contribute to solving different objects or problems, having different effects.

### <<1. Introduction>>

### <1.1. Overview of communication system>

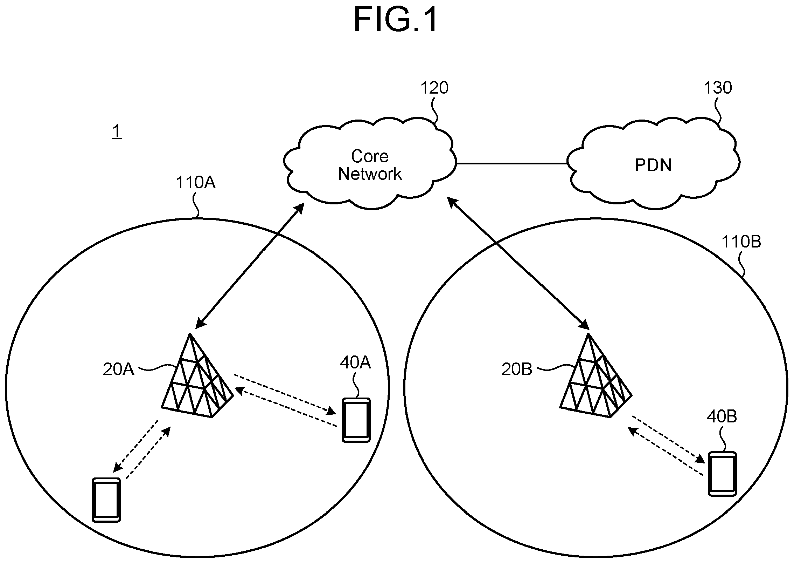

FIG. 1 is a diagram illustrating an exemplary entire configuration of a communication system 1 according to an embodiment of the present disclosure. As illustrated in FIG. 1, the communication system 1 includes a plurality of base station apparatuses 20 (20A and 20B), a plurality of terminal devices 40 (40A and 40B), a core network 120, and a packet data network (PDN) 130. Note that the number of the base station apparatuses 20 and the number of the terminal devices 40 are not limited thereto, and for example, one base station apparatus 20 and one terminal device 40 may be adopted.

Each of the base station apparatuses 20 is a communication device that operates a cell 110 and that provides a wireless communication service to one or more terminal devices 40 located inside the coverage of the cell 110. The cell 110 is operated according to an any wireless communication system such as long term evolution (LTE) or new radio (NR). The base station apparatus 20 is connected to the core network 120.

The core network 120 is connected to the packet data network (PDN) 130 via a gateway device (not illustrated).

When the core network 120 is an NR core network (5G Core (5GC)), the core network 120 can include an access and mobility management function (AMF), a session management function (SMF), a user plane function (UPF), a policy control function (PCF), and a unified data management (UDM).

When the core network 120 is an LTE core network (evolved packet core (EPC)), the core network 120 can include a mobility management entity (MME), a serving gateway (S-GW), a PDN gateway (P-GW), a policy and charging rule function (PCRF), and a home subscriber server (HSS). AMF and MME are control nodes that handle control plane signals and manage the movement states (mobility) of the terminal devices 40. UPF and S-GW/P-GW are nodes that handle user plane signals. PCF/PCRF is a control node that performs control of policy and charging, such as quality of service (QoS), for a PDU session or bearer. UDM/HSS is a control node that handles subscriber data and performs service control.

Each of the terminal devices 40 is a communication device that wirelessly communicates with the corresponding base station apparatus 20, on the basis of control by the base station apparatus 20. Examples of the terminal device 40 include a camera device, a mobile phone, and a smart device (smartphone or tablet) that have a communication function.

Note that, although not illustrated in FIG. 1, around the communication system 1, there can be a communication device that provides a wireless communication service operated by another RAT such as Wi-Fi (registered trademark) or MulteFire (registered trademark) other than cellular communication. Such a communication device is typically connected to the PDN 130.

### <1.2. Problem>

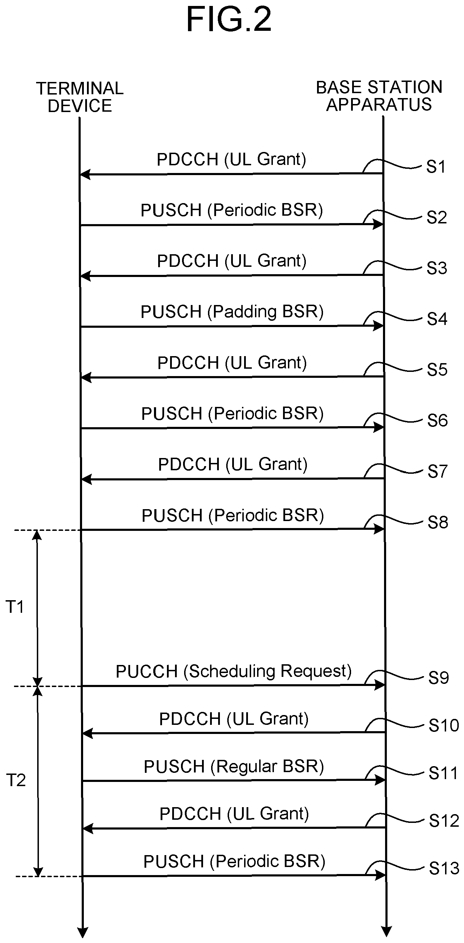

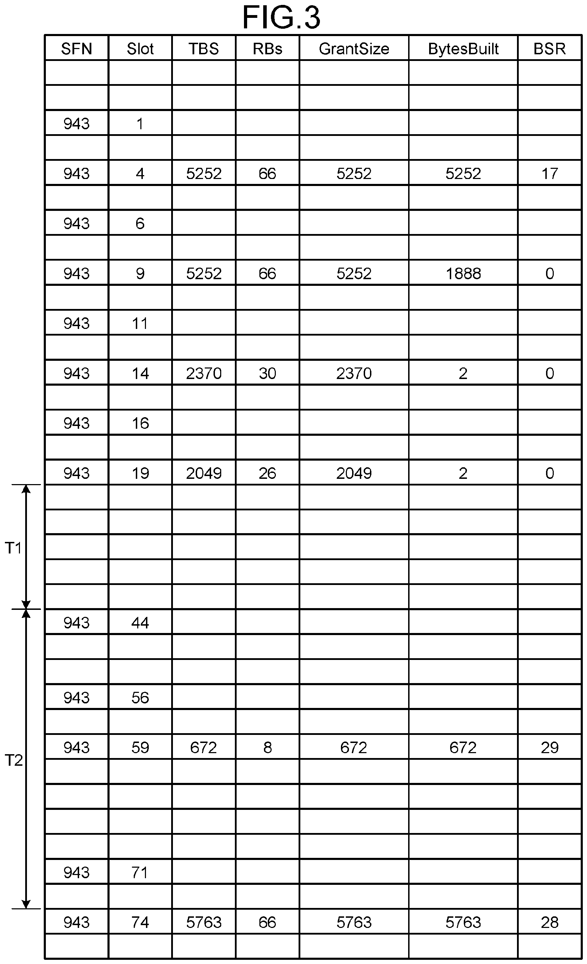

FIG. 2 is a sequence diagram illustrating an example of uplink communication performed between the base station apparatus 20 and the terminal device 40. FIG. 3 is a table illustrating an example of parameters for the uplink communication performed between the base station apparatus 20 and the terminal device 40.

As illustrated in FIG. 2, the base station apparatus 20 uses a physical downlink control channel (PDCCH) to transmit downlink control information (DCI) to the terminal device 40 (Step S1). The DCI includes, for example, an uplink (UL) grant indicating information such as resources used for the uplink communication. The UL grant is transmitted by using, for example, resources of system frame number (SFN) = 943 and slot = 1 in FIG. 3.

As illustrated in FIG. 2, the terminal device 40 uses a physical uplink shared channel (PUSCH) to transmit a transmission signal to the base station apparatus 20 (Step S2). For example, the transmission signal has a header including buffer information (buffer status report (BSR), periodic BSR in FIG. 2) indicating a state of a transmission buffer included in the terminal device 40.

The periodic BSR is BSR periodically transmitted to the base station apparatus 20. The terminal device 40 converts transmission data stored in the transmission buffer into the transmission signal to transmit the transmission signal to the base station apparatus 20. The BSR is buffer information related to the size of transmission data stored in the transmission buffer. The terminal device 40 periodically transmits the BSR to the base station apparatus 20, as the periodic BSR.

In the example of FIG. 3, the terminal device 40 transmits the transmission data stored in the transmission buffer by using resources having SFN = 943 and slot = 4. The base station apparatus 20 allocates resources having a size indicated by GrantSize (in the example of FIG. 3, GrantSize = 5252 bytes), to the terminal device 40 by using the UL grant. The base station apparatus 20 determines a size resources to be allocated to the terminal device 40 on the basis of, for example, BSR transmitted in the periodic BSR.

The terminal device 40 converts the transmission data having a size indicated by BytesBuilt (in the example of FIG. 3, BytesBuilt = 5252 bytes), into the transmission signal having a size indicated by a transport block size (TBS) (in the example of FIG. 3, TBS = 5252 bytes), and transmits the transmission signal to the base station apparatus 20.

In FIG. 3, RBs indicates the size of resource blocks to which the transmission signal is mapped. When the terminal device 40 transmits the transmission signal by using resources having SFN = 943 and slot = 4, the transmission signal is allocated to resource blocks having RBs = 66 and transmitted to the base station apparatus 20.

In FIG. 3, BSR indicates the buffer information transmitted from the terminal device 40 to the base station apparatus 20. When the terminal device 40 transmits the transmission signal by using resources having SFN = 943 and slot = 4, the terminal device 40 transmits the transmission signal including periodic BSR having BSR = 17 in the header.

BSR "17" indicates that the size of the transmission data stored in the transmission buffer (buffer size, BS) is larger than 1446 bytes and equal to or less than 2014 bytes (1446 bytes < BS ≤ 2014 bytes).

Description will be continued with reference again to FIG. 2. The base station apparatus 20 uses the physical downlink control channel (PDCCH) to transmit the downlink control information including the UL grant to the terminal device 40 (Step S3). The base station apparatus 20 transmits the downlink control information by using resources having SFN = 943 and slot = 6 (see FIG. 3).

As illustrated in FIG. 2, the terminal device 40 transmits the transmission signal to the base station apparatus 20 by using the PUSCH (Step S4). At this time, the terminal device 40 transmits the transmission signal including padding BSR in the header, to the base station apparatus 20. The padding BSR is transmitted when padding data in the data transmitted through the PUSCH has a size equal to or larger than the remaining buffer size.

Here, BytesBuilt = 1888 bytes and the remaining buffer size (BSR) is "0 (= 0 byte)" to TBS 5252 bytes, and therefore, the padding BSR is transmitted from the terminal device 40.

The terminal device 40 transmits the transmission signal by using resources having SFN = 943 and slot = 9 (see FIG. 3). As described above, the terminal device 40 transmits the padding BSR as the BSR.

In the example of FIG. 3, the terminal device 40 transmits the transmission data stored in the transmission buffer by using resources having SFN = 943 and slot = 9. The base station apparatus 20 uses UL grant to allocate resources having GrantSize = 5252 bytes to the terminal device 40.

The terminal device 40 converts the transmission data having BytesBuilt = 1888 bytes into the transmission signal having TBS = 5252 bytes. The terminal device 40 allocates the transmission signal to resource blocks having RBs = 66, for transmission to the base station apparatus 20.

As illustrated in FIG. 2, the base station apparatus 20 uses the physical downlink control channel (PDCCH) to transmit the downlink control information including the UL grant to the terminal device 40 (Step S5). The base station apparatus 20 transmits the downlink control information by using resources having SFN = 943 and slot = 11 (see FIG. 3).

As illustrated in FIG. 2, the terminal device 40 transmits the transmission signal to the base station apparatus 20 by using the PUSCH (Step S6). At this time, the terminal device 40 transmits the transmission signal including periodic BSR in the header, to the base station apparatus 20.

At this time, as illustrated in FIG. 3, the terminal device 40 transmits the transmission signal by using the resources having SFN = 943 and slot = 11. The base station apparatus 20 uses UL grant to allocate resources having GrantSize = 2370 bytes to the terminal device 40.

The terminal device 40 converts the transmission data having BytesBuilt = 2 bytes into the transmission signal having TBS = 2370 bytes. The terminal device 40 allocates the transmission signal to resource blocks having RBs = 30, for transmission to the base station apparatus 20.

Here, the terminal device 40 transmits the transmission signal including periodic BSR having BSR = 0 in the header. BSR "0" indicates that the size of the transmission data stored in the transmission buffer is "0" and the transmission buffer is empty.

Note that, as described above, when the transmission buffer is empty, the terminal device 40 transmits, to the base station apparatus 20, data (padding data) padded with a predetermined value (e.g., "0"), as the transmission data.

As illustrated in FIG. 2, the base station apparatus 20 uses the physical downlink control channel (PDCCH) to transmit the downlink control information including the UL grant to the terminal device 40 (Step S7). The base station apparatus 20 transmits the downlink control information by using resources having SFN = 943 and slot = 16 (see FIG. 3).

As illustrated in FIG. 2, the terminal device 40 transmits the transmission signal to the base station apparatus 20 by using the PUSCH (Step S8). At this time, the terminal device 40 transmits the transmission signal including periodic BSR in the header, to the base station apparatus 20.

At this time, as illustrated in FIG. 3, the terminal device 40 transmits the transmission signal by using resources having SFN = 943 and slot = 19. The base station apparatus 20 uses UL grant to allocate resources having GrantSize = 2049 bytes to the terminal device 40.

The terminal device 40 converts the transmission data having BytesBuilt = 2 bytes into the transmission signal having TBS = 2049 bytes. The terminal device 40 allocates the transmission signal to resource blocks having RBs = 26, for transmission to the base station apparatus 20. Here, the terminal device 40 transmits the transmission signal including periodic BSR having BSR = 0 in the header.

Description will be continued with reference again to FIG. 2. As described above, when the terminal device 40 transmits the periodic BSR having BSR = 0 or Padding BSR, the base station apparatus 20 stops the transmission of the UL grant to the terminal device 40. In other words, upon acquiring a notification that the transmission buffer of the terminal device 40 is empty, the base station apparatus 20 stops allocating resources to the terminal device 40.

In the example illustrated in FIG. 2, after a period of time T1 from stopping transmission of the UL grant by the base station apparatus 20, the base station apparatus 20 receives a scheduling request from the terminal device 40 via a physical uplink control channel (PUCCH) (Step S9). The base station apparatus 20 receives the scheduling request using the resources having SFN = 943 and slot = 44 (see FIG. 3).

As illustrated in FIG. 2, in response to the scheduling request, the base station apparatus 20 uses the physical downlink control channel (PDCCH) to transmit the downlink control information including the UL grant to the terminal device 40 (Step S10). The base station apparatus 20 transmits the downlink control information by using resources having SFN = 943 and slot = 56 (see FIG. 3).

As illustrated in FIG. 2, the terminal device 40 transmits the transmission signal to the base station apparatus 20 by using the PUSCH (Step S11). At this time, the terminal device 40 transmits the transmission signal including regular BSR in the header, to the base station apparatus 20. The regular BSR is BSR transmitted to the base station apparatus 20 after the scheduling request.

At this time, as illustrated in FIG. 3, the terminal device 40 transmits the transmission signal by using resources having SFN = 943 and slot = 59. The base station apparatus 20 uses UL grant to allocate resources having GrantSize = 672 bytes to the terminal device 40.

The terminal device 40 converts the transmission data having BytesBuilt = 672 bytes into the transmission signal having TBS = 672 bytes. The terminal device 40 allocates the transmission signal to resource blocks having RBs = 26, for transmission to the base station apparatus 20. Here, the terminal device 40 transmits the transmission signal including the regular BSR having BSR = 29 in the header.

BSR "29" indicates that the size of the transmission data stored in the transmission buffer is larger than 77284 bytes and is equal to or less than 107669 bytes (77284 bytes < BS ≤ 107669 bytes).

In Step S11, the terminal device 40 transmits the regular BSR. Here, the resources allocated to the terminal device 40 has GrantSize = 672 bytes, and only a small amount of resources that can only transmit the buffer size with BSR can be allocated.

Description will be continued with reference again to FIG. 2. The base station apparatus 20 having received the transmission signal including the regular BSR uses the physical downlink control channel (PDCCH) to transmit the downlink control information including the UL grant to the terminal device 40 (Step S12). The base station apparatus 20 transmits the downlink control information by using resources having SFN = 943 and slot = 71 (see FIG. 3).

As illustrated in FIG. 2, the terminal device 40 transmits the transmission signal to the base station apparatus 20 by using the PUSCH (Step S11). At this time, the terminal device 40 transmits the transmission signal including periodic BSR in the header, to the base station apparatus 20.

At this time, as illustrated in FIG. 3, the terminal device 40 transmits the transmission signal by using resources having SFN = 943 and slot = 74. The base station apparatus 20 uses UL grant to allocate resources having GrantSize = 5763 bytes to the terminal device 40.

The terminal device 40 converts the transmission data having BytesBuilt = 5763 bytes into the transmission signal having TBS = 5763 bytes. The terminal device 40 allocates the transmission signal to resource blocks having RBs = 66, for transmission to the base station apparatus 20. Here, the terminal device 40 transmits the transmission signal including periodic BSR having BSR = 28 in the header.

BSR "28" indicates that the size of the transmission data stored in the transmission buffer is larger than 55474 bytes and is equal to or less than 77284 bytes (55474 bytes < BS ≤ 77284 bytes).

Thereafter, the base station apparatus 20 and the terminal device 40 restart the uplink communication. As illustrated in FIG. 2, a period of time T2 is required from when the terminal device 40 transmits the scheduling request and requests the base station apparatus 20 to restart the uplink communication to when uplink resources are actually allocated and uplink communication is restarted. Note that it can be said that the scheduling request is a resource request for the terminal device 40 to request the base station apparatus 20 to restart the allocation of resources.

As described above, when the terminal device 40 transmits all the transmission data accumulated in the transmission buffer (uplink buffer) to empty the transmission buffer, the base station apparatus 20 stops the transmission of the UL grant. Therefore, the terminal device 40 needs to perform uplink communication restart processing such as transmission of the scheduling request and transmission of the regular BSR to restart the transmission of transmission data next.

In a use case where a concert video being captured by a camera is being transmitted to a server or the like via a high-speed communication network such as 5G, for example, in a use case of real-time distribution of an event such as a live concert as described above, it is important to maintain real-time in the uplink direction.

In such a use case, once the transmission buffer of the terminal device 40 becomes empty and the transmission of the UL grant is stopped, the restart processing is required before the uplink communication is restarted next. As described above, in the conventional uplink communication, there has been a problem that a delay occurs due to the uplink communication restart processing, when the transmission buffer of the terminal device 40 becomes empty.

For example, specifically, it is assumed that 30 slots are required, from generation of new data once the transmission buffer of the terminal device 40 is empty, to restart of next transmission of the transmission data by the terminal device 40. In this case, for example, when a subcarrier spacing (mmW, SCS) in millimeter wave is 120 kHz, a period of time T2 until the uplink communication is restarted is T2 = 30 × 0.125 msec = 3.75 msec. In other words, a delay of 3.75 msec occurs from when new transmission data is generated in the terminal device 40 to when the uplink communication is restarted.

Note that the terminal device 40 transmits the scheduling request at a determined periodic cycle (timing). Therefore, depending on the timing of transmitting the scheduling request, there is a possibility that the period of time T2 from the generation of the new transmission data in the terminal device 40 to the restart of the uplink communication may be further increased.

In this way, in the use case where the real-time in the uplink direction is required, it is desirable to further reduce the delay that occurs when the transmission buffer of the terminal device 40 is empty.

Note that the periodic cycle at which the terminal device 40 transmits the scheduling request is defined in, for example, 3GPP38.311. The periodic cycle can take a plurality of values according to, for example, the subcarrier spacing (SCS).

### <1.3. Proposed technology>

As described above, in the conventional uplink communication, there has been a problem that a delay occurs from generation of new transmission data after the transmission buffer of the terminal device 40 is empty, to restart of the uplink communication.

The base station apparatus 20 of the communication system 1 according to the present disclosure performs uplink communication with the terminal device 40 (example of the communication device). The base station apparatus 20 acquires, from the terminal device 40, a notification (e.g., BSR) indicating that an amount of data stored in the transmission buffer of the terminal device 40 is equal to or less than a predetermined amount (e.g., equal to or less than 0). Upon acquiring the notification, the base station apparatus 20 allocates resources used for transmission of a signal by the terminal device 40 for a certain period of time, to the terminal device 40.

In other words, for example, even when the transmission buffer of the terminal device 40 becomes empty and there is no transmission data, the base station apparatus 20 transmits the UL grant to the terminal device 40 in the certain period of time. Therefore, in the period of time T1 illustrated in FIGS. 2 and 3, the UL grant is transmitted to the terminal device 40.

Therefore, when new transmission data is generated after the transmission buffer is empty, the terminal device 40 is allowed to transmit the new transmission data to the base station apparatus 20 by using the resources allocated by the base station apparatus 20 for the certain period of time on the basis of the UL grant transmitted for the certain period of time. Accordingly, even when the new transmission data is generated after the transmission buffer is empty, the terminal device 40 does not need to transmit the scheduling request to the base station apparatus 20 to perform the restart processing. In this way, the communication system 1 according to the present disclosure is configured to further reduce the delay that occurs before the uplink communication is restarted.

Note that the certain period of time does not need to be the same as the period of time T1. The certain period of time may be a preset period of time or a period of time appropriately set by the base station apparatus 20. The certain period of time may be determined according to, for example, a periodic cycle (e.g., periodic cycle (frame rate) in which video data is captured) in which the transmission data (e.g., video data) transmitted by the terminal device 40 is generated. Alternatively, the certain period of time may be determined according to a transmission interval for the terminal device 40 to transmit the transmission data.

### <<2. Exemplary configuration of communication system>>

### <2.1. Configuration of base station apparatus>

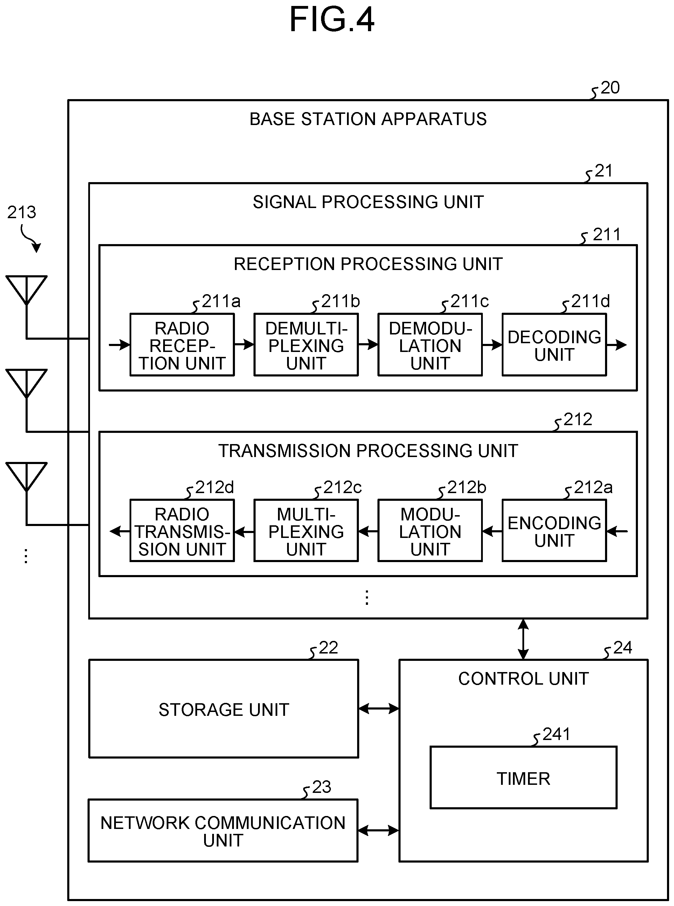

FIG. 4 is a diagram illustrating an exemplary configuration of the base station apparatus 20 according to an embodiment of the present disclosure. The base station apparatus 20 is a communication device (wireless system) that wirelessly communicates with the terminal device 40. The base station apparatus 20 is a type of information processing device.

The base station apparatus 20 includes a signal processing unit 21, a storage unit 22, a network communication unit 23, and a control unit 24. Note that the configuration illustrated in FIG. 4 represents a functional configuration, and the base station apparatus 20 may have a hardware configuration different from this functional configuration. Furthermore, the functions of the base station apparatus 20 may be distributed in a plurality of physically separated devices for implementation.

### (Signal processing unit 21)

The signal processing unit 21 is a wireless communication interface that wirelessly communicates with other communication devices (e.g., the terminal device 40 and another base station apparatus 20). The signal processing unit 21 is a communication unit (wireless transceiver) that operates under the control of the control unit 24. The signal processing unit 21 may support a plurality of radio access systems. For example, the signal processing unit 21 may support both of NR and LTE. The signal processing unit 21 may support another cellular communication system such as W-CDMA or cdma2000. Furthermore, the signal processing unit 21 may support a wireless LAN communication system in addition to the cellular communication system. As a matter of course, the signal processing unit 21 may only correspond to one radio access system.

The signal processing unit 21 includes a reception processing unit 211, a transmission processing unit 212, and an antenna 413. The signal processing unit 21 may include a plurality of the reception processing units 211, the transmission processing units 212, and the antennas 413. Note that when the signal processing unit 21 supports the plurality of radio access systems, the units of the signal processing unit 21 can be configured individually for each of the radio access systems. For example, when the base station apparatus 20 supports NR and LTE, the reception processing units 211 and the transmission processing units 212 may be configured individually for NR and LTE.

### (Reception processing unit 211)

The reception processing unit 211 performs processing for an uplink signal received via the antenna 413. The reception processing unit 211 includes a radio reception unit 211a, a demultiplexing unit 211b, a demodulation unit 211c, and a decoding unit 211d.

The radio reception unit 211a performs, on the uplink signal, down conversion, removal of an unnecessary frequency component, control of an amplification level, quadrature demodulation, conversion to a digital signal, removal of a guard interval, and extraction of a frequency domain signal by fast Fourier transform, or the like. For example, it is assumed that the radio access system of the base station apparatus 20 is a cellular communication system such as LTE. At this time, the demultiplexing unit 211b demultiplexes an uplink channel, such as a physical uplink shared channel (PUSCH) and physical uplink control channel (PUCCH), and an uplink reference signal, from a signal output from the radio reception unit 211a. The demodulation unit 211c applies a modulation method such as binary phase shift keying (BPSK) or quadrature phase shift keying (QPSK) to a modulated symbol in the uplink channel to demodulate the received signal. The modulation method used by the demodulation unit 211c may employ multi-level QAM such as 16 quadrature amplitude modulation (QAM), 64QAM, or 256QAM. The decoding unit 211d performs decoding processing on encoded bits in the uplink channel demodulated. Decoded uplink data and uplink control information are output to the control unit 24.

### (Transmission processing unit 212)

The transmission processing unit 212 performs transmission processing for downlink control information and downlink data. The transmission processing unit 212 includes an encoding unit 212a, a modulation unit 212b, a multiplexing unit 212c, and a radio transmission unit 212d.

The encoding unit 212a performs encoding of the downlink control information and the downlink data that are input from the control unit 24, by using an encoding method such as block coding, convolutional coding, or turbo coding. The modulation unit 212b modulates encoded bits output from the encoding unit 212a, by using a predetermined modulation method such as BPSK, QPSK, 16QAM, 64QAM, or 256QAM. The multiplexing unit 212c allocates a modulated symbol and a downlink reference signal that are multiplexed for each channel, to a predetermined resource element. The radio transmission unit 212d performs various types of signal processing on a signal from the multiplexing unit 212c. For example, the radio transmission unit 212d performs processing such as conversion to a time domain by using fast Fourier transform, addition of a guard interval, generation of a baseband digital signal, conversion to an analog signal, quadrature modulation, up-conversion, removal of an unnecessary frequency component, and amplification of power. The signal generated by the transmission processing unit 212 is transmitted from the antenna 413.

### (Storage unit 22)

The storage unit 22 is a data readable/writable storage device such as DRAM, SRAM, a flash memory, or a hard disk. The storage unit 22 functions as storage means for the base station apparatus 20.

### (Network communication unit 23)

The network communication unit 23 is a communication interface for communicating with another device (e.g., another base station apparatus 20 or a function of the core network 120). For example, the network communication unit 23 is a local area network (LAN) interface such as a network interface card (NIC). The network communication unit 23 may be a universal serial bus (USB) interface including a USB host controller, a USB port, and the like. Furthermore, the network communication unit 23 may be a wired interface or a wireless interface. The network communication unit 23 functions as network communication means for the base station apparatus 20. The network communication unit 23 communicates with the another device under the control of the control unit 24.

### (Control unit 24)

The control unit 24 is a controller that controls each unit of the base station apparatus 20. The control unit 24 is a hardware processor that controls each unit of the base station apparatus 20. The control unit 24 is implemented by a processor such as a central processing unit (CPU) or a micro processing unit (MPU). For example, the control unit 24 is implemented by executing various programs stored in the storage device in the base station apparatus 20 by the processor, with a random access memory (RAM) or the like as a working area. Note that the control unit 24 may be implemented by an integrated circuit such as an application specific integratedcircuit (ASIC) or a field programmable gate array (FPGA). Any of the CPU, MPU, ASIC, and FPGA can be regarded as the controller.

The control unit 24 acquires the BSR from the terminal device 40 via the signal processing unit 21. When the acquired BSR indicates that the amount of data of the transmission data stored in the transmission buffer of the terminal device 40 is equal to or less than the predetermined amount, the control unit 24 allocates the resources for the uplink communication, to the terminal device 40, for the certain period of time. The control unit 24 periodically transmits the UL grant including information about the allocated resources, to the terminal device 40, for the certain period of time. The control unit 24 measures, for example, the certain period of time by using a timer 241 included in the control unit 24.

When the transmission data (i.e., the transmission signal transmitted by using PUSCH) from the terminal device 40 is not received, even when the timer 241 times out, that is, even when the certain period of time has elapsed, the base station apparatus 20 stops the allocation of the resources for the uplink communication. When the certain period of time has elapsed, the base station apparatus 20 stops transmission of the UL grant until the scheduling request is transmitted from the terminal device 40.

### <2.2. Exemplary configuration of terminal device>

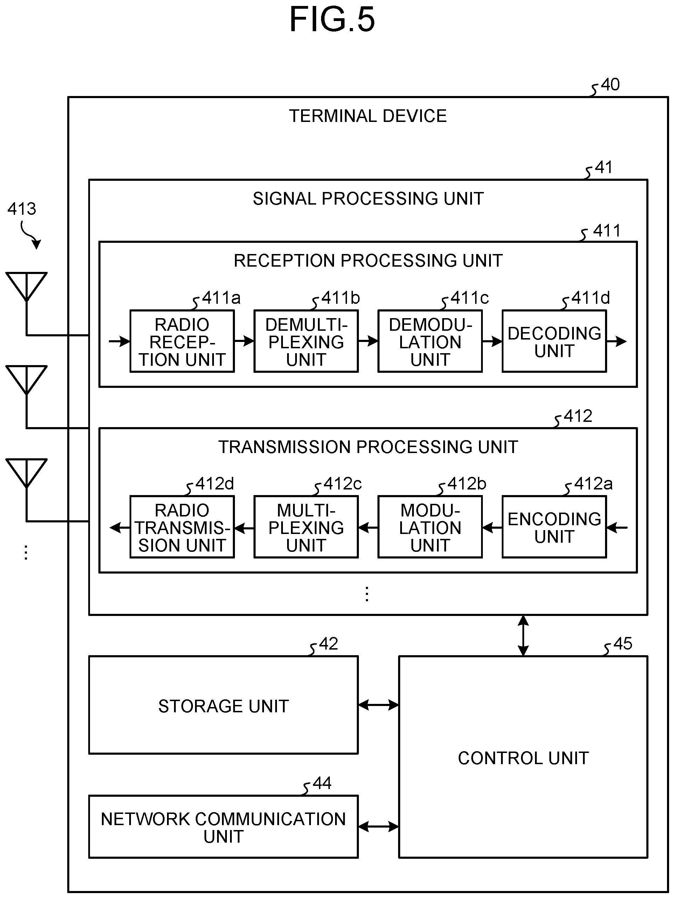

FIG. 5 is a diagram illustrating an exemplary configuration of the terminal device 40 according to an embodiment of the present disclosure. The terminal device 40 is a communication device that wirelessly communicates with the base station apparatus 20. Furthermore, the terminal device 40 is a type of information processing device.

The terminal device 40 includes a signal processing unit 41, a storage unit 42, a network communication unit 44, and a control unit 45. Note that the configuration illustrated in FIG. 5 represents a functional configuration, and the terminal device 40 may have a hardware configuration different from this functional configuration. Furthermore, the functions of the terminal device 40 may be distributed, for implementation, in a plurality of physically separated configurations.

### (Signal processing unit 41)

The signal processing unit 41 is a wireless communication interface that wirelessly communicates with other communication devices (e.g., the base station apparatus 20 and another terminal device 40). The signal processing unit 41 is a wireless transceiver that operates under the control of the control unit 45. The signal processing unit 41 supports one or more radio access systems. For example, the signal processing unit 41 supports both of NR and LTE. The signal processing unit 41 may support another radio access system such as W-CDMA or cdma2000.

The signal processing unit 41 includes a reception processing unit 411, a transmission processing unit 412, and an antenna 313. The signal processing unit 41 may include a plurality of the reception processing units 411, the transmission processing units 412, and the antennas 313. Note that when the signal processing unit 41 supports the plurality of radio access systems, the units of the signal processing unit 41 can be configured individually for each of the radio access systems. For example, the reception processing units 411 and the transmission processing units 412 may be configured individually for LTE and NR. The configurations of the reception processing unit 411 and the transmission processing unit 412 are similar to those of the reception processing units 211 and the transmission processing units 212 of the base station apparatus 20.

### (Storage unit 42)

A storage unit 42 is a data readable/writable storage device such as DRAM, SRAM, a flash memory, or a hard disk. The storage unit 42 functions as storage means for the terminal device 40.

### (Network communication unit 44)

The network communication unit 44 is a communication interface for communicating with another device. For example, the network communication unit 44 is a local area network (LAN) interface such as a network interface card (NIC). The network communication unit 44 may be a universal serial bus (USB) interface including a USB host controller, a USB port, and the like. Furthermore, the network communication unit 44 may be a wired interface or a wireless interface. The network communication unit 44 functions as network communication means for the terminal device 40. The network communication unit 44 communicates with the another device under the control of the control unit 45.

### (Control unit 45)

The control unit 45 is a controller that controls each unit of the terminal device 40. The control unit 24 is a hardware processor that controls each unit of the terminal device 40. The control unit 45 is implemented by a processor such as CPU or MPU. For example, the control unit 45 is implemented by executing various programs stored in the storage device in the terminal device 40 by the processor, with RAM or the like as a working area. Note that the control unit 45 may be implemented by an integrated circuit such as ASIC or FPGA. Any of the CPU, MPU, ASIC, and FPGA can be regarded as the controller.

For example, the control unit 45 transmits video data to the base station apparatus 20 via the signal processing unit 41 in real time. The control unit 45 transmits, for example, the video data captured by an imaging device (not illustrated) mounted on the terminal device 40, to the base station apparatus 20. Alternatively, the control unit 45 may transmit, for example, video data captured by an imaging device (not illustrated) provided outside the terminal device 40, to the base station apparatus 20. In this case, the control unit 45 can acquire the video data from the imaging device via the network communication unit 44.

Furthermore, the control unit 45 can transmit data other than real-time data such as the video data described above, to the base station apparatus 20. For example, the control unit 45 can exchange, with the base station apparatus 20, data for which the real-time is not required, such as exchanging e-mails, a social networking service (SNS), or the like, or browsing a website.

### <<3. Operation examples of communication system>>

As described above, even when the transmission buffer of the terminal device 40 becomes empty, the base station apparatus 20 allocates the resources for the uplink communication to the terminal device 40 for the certain period of time and transmits the UL grant.

Therefore, in the embodiment of the present disclosure, the uplink communication performed between the base station apparatus 20 and the terminal device 40 will be described first.

### <3.1. Uplink communication>

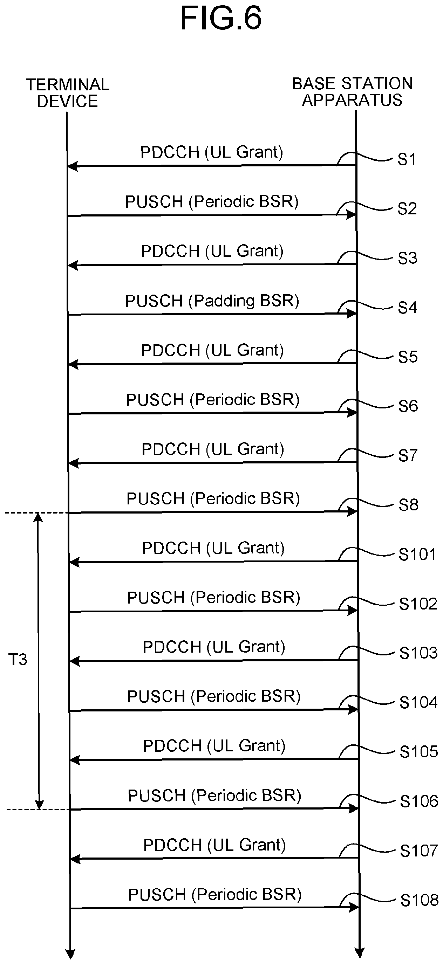

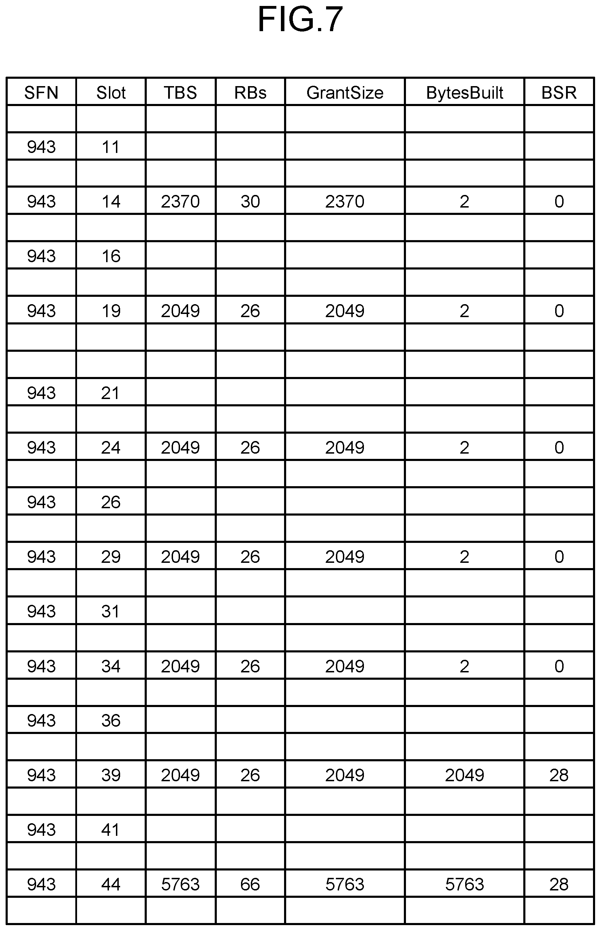

FIG. 6 is a sequence diagram illustrating an example of the uplink communication performed between the base station apparatus 20 and the terminal device 40 according to an embodiment of the present disclosure. FIG. 7 is a diagram illustrating an example of parameters for the uplink communication performed between the base station apparatus 20 and the terminal device 40 according to an embodiment of the present disclosure. Note that in FIGS. 6 and 7, for the same operations as those in FIGS. 2 and 3, descriptions thereof will be omitted.

As illustrated in FIG. 6, the base station apparatus 20 having received the transmission signal including the periodic BSR having BSR = 0 in Step S8 uses the physical downlink control channel (PDCCH) to transmit the downlink control information including the UL grant to the terminal device 40 (Step S101). The base station apparatus 20 transmits the downlink control information by using resources having SFN = 943 and slot = 21 illustrated in FIG. 7.

As illustrated in FIG. 6, the terminal device 40 transmits the transmission signal to the base station apparatus 20 using the PUSCH (Step S102). At this time, the terminal device 40 transmits the transmission signal including periodic BSR in the header, to the base station apparatus 20.

At this time, as illustrated in FIG. 7, the terminal device 40 transmits the transmission signal by using resources having SFN = 943 and slot = 24. The base station apparatus 20 uses UL grant to allocate resources having GrantSize = 2049 bytes to the terminal device 40.

The terminal device 40 converts the transmission data having BytesBuilt = 2 bytes into the transmission signal having TBS = 2049 bytes. The terminal device 40 allocates the transmission signal to resource blocks having RBs = 26, for transmission to the base station apparatus 20. Here, the terminal device 40 transmits the transmission signal including periodic BSR having BSR = 0 in the header. Note that BSR = 0 represents that no transmission data is stored in the transmission buffer of the terminal device 40. Therefore, the terminal device 40 transmits, for example, padding data to the base station apparatus 20, as the transmission data.

Description will be continued with reference again to FIG. 6. The base station apparatus 20 uses the physical downlink control channel (PDCCH) to transmit the downlink control information including the UL grant to the terminal device 40 (Step S103). The base station apparatus 20 transmits the downlink control information by using resources having SFN = 943 and slot = 26 illustrated in FIG. 7.

As illustrated in FIG. 6, the terminal device 40 transmits the transmission signal to the base station apparatus 20 using the PUSCH (Step S104). At this time, the terminal device 40 transmits the transmission signal including periodic BSR in the header, to the base station apparatus 20.

At this time, as illustrated in FIG. 7, the terminal device 40 transmits the transmission signal by using resources having SFN = 943 and slot = 29. The base station apparatus 20 uses UL grant to allocate resources having GrantSize = 2049 bytes to the terminal device 40.

The terminal device 40 converts the transmission data having BytesBuilt = 2 bytes into the transmission signal having TBS = 2049 bytes. The terminal device 40 allocates the transmission signal to resource blocks having RBs = 26, for transmission to the base station apparatus 20. Here, the terminal device 40 transmits, as the transmission signal, the padding data including periodic BSR having BSR = 0 in the header.

As illustrated in FIG. 6, the base station apparatus 20 uses the physical downlink control channel (PDCCH) to transmit the downlink control information including the UL grant to the terminal device 40 (Step S105). The base station apparatus 20 transmits the downlink control information by using resources having SFN = 943 and slot = 31 illustrated in FIG. 7.

As illustrated in FIG. 6, the terminal device 40 transmits the transmission signal to the base station apparatus 20 using the PUSCH (Step S106). At this time, the terminal device 40 transmits the transmission signal including periodic BSR in the header, to the base station apparatus 20.

At this time, as illustrated in FIG. 7, the terminal device 40 transmits the transmission signal by using resources having SFN = 943 and slot = 34. The base station apparatus 20 uses UL grant to allocate resources having GrantSize = 2049 bytes to the terminal device 40. In this way, the base station apparatus 20 sets the size of the resources allocated to the terminal device 40 when the transmission buffer of the terminal device 40 is empty, smaller than the size of the resources allocated to the terminal device 40 when the transmission buffer is not empty.

The terminal device 40 converts the transmission data having BytesBuilt = 2 bytes into the transmission signal having TBS = 2049 bytes. The terminal device 40 allocates the transmission signal to resource blocks having RBs = 26, for transmission to the base station apparatus 20. Here, the terminal device 40 transmits, as the transmission signal, the padding data including periodic BSR having BSR = 0 in the header.

As illustrated in FIG. 6, the base station apparatus 20 uses the physical downlink control channel (PDCCH) to transmit the downlink control information including the UL grant to the terminal device 40 (Step S105). The base station apparatus 20 transmits the downlink control information by using resources having SFN = 943 and slot = 36 illustrated in FIG. 7.

As illustrated in FIG. 6, the terminal device 40 transmits the transmission signal to the base station apparatus 20 using the PUSCH (Step S106). At this time, the terminal device 40 transmits the transmission signal including periodic BSR in the header, to the base station apparatus 20.

At this time, as illustrated in FIG. 7, the terminal device 40 transmits the transmission signal by using resources having SFN = 943 and slot = 39. The base station apparatus 20 uses UL grant to allocate resources having GrantSize = 2049 bytes to the terminal device 40.

The terminal device 40 converts the transmission data having BytesBuilt = 2049 bytes into the transmission signal having TBS = 2049 bytes. The terminal device 40 allocates the transmission signal to resource blocks having RBs = 26, for transmission to the base station apparatus 20.

Here, in Step S106, it is assumed that new transmission data is generated in the terminal device 40 and stored in the transmission buffer. Here, the terminal device 40 transmits BSR (BSR = 28 in the example of FIG. 7) having a value corresponding to the size (amount of data) of the transmission data stored in the transmission buffer to the base station apparatus 20, as the periodic BSR.

As illustrated in FIG. 6, the base station apparatus 20 uses the physical downlink control channel (PDCCH) to transmit the downlink control information including the UL grant to the terminal device 40 (Step S107). The base station apparatus 20 transmits the downlink control information by using resources having SFN = 943 and slot = 41 illustrated in FIG. 7.

As illustrated in FIG. 6, the terminal device 40 transmits the transmission signal to the base station apparatus 20 using the PUSCH (Step S108). At this time, the terminal device 40 transmits the transmission signal including periodic BSR in the header, to the base station apparatus 20.

At this time, as illustrated in FIG. 7, the terminal device 40 transmits the transmission signal by using resources having SFN = 943 and slot = 44. On the basis of the value (BSR = 28) of the BSR received last time, the base station apparatus 20 uses UL grant to allocate resources having GrantSize = 5763 bytes to the terminal device 40.

The terminal device 40 converts the transmission data having BytesBuilt = 5763 bytes into the transmission signal having TBS = 5763 bytes. The terminal device 40 allocates the transmission signal to resource blocks having RBs = 66, for transmission to the base station apparatus 20. At this time, the terminal device 40 transmits the transmission signal including periodic BSR having BSR = 28, in the header, to the base station apparatus 20.

In this way, the base station apparatus 20 according to the embodiment of the present disclosure transmits the UL grant to the terminal device 40 even after receiving the periodic BSR having BSR = 0 in Step S8 (see a period of time T3 in FIG. 6). Therefore, even when the new transmission data is generated in Step S106, the terminal device 40 is allowed to transmit the new transmission data to the base station apparatus 20 at the next transmission opportunity (Step S108). The terminal device 40 is allowed to omit the uplink communication restart processing such as the transmission of the scheduling request and the transmission of the regular BSR, further reducing the delay before the uplink transmission is restarted.

### <3.2. Connecting process>

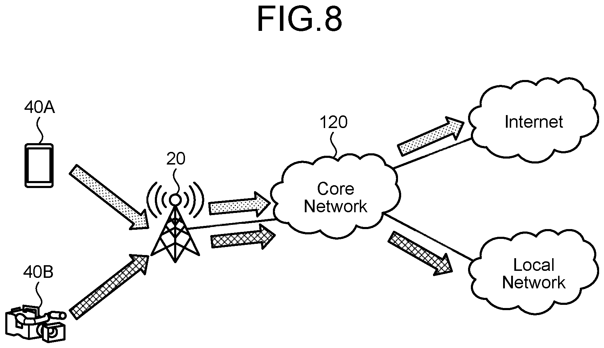

FIG. 8 is a diagram illustrating an example of uplink communication performed in the communication system 1 according to an embodiment of the present disclosure.

Here, in the communication system 1, as described above, for example, the uplink communication (hereinafter, also referred to as real-time UL communication) for which the real-time is required and low latency in restarting the uplink communication is required, such as communication in video distribution service, is performed.

In the example illustrated in FIG. 8, the terminal device 40B (example of first communication device) transmits captured video data to the base station apparatus 20 through the real-time UL communication. The video data is transmitted to, for example, a video server (not illustrated) arranged in a local network via the base station apparatus 20 and the core network 120.

Meanwhile, in the communication system 1, uplink communication (hereinafter, also referred to as normal UL communication) for which the real-time is not required, such as exchange of e-mail, SNS, or the like, or browsing of a website, is also performed.

In the example illustrated in FIG. 8, the terminal device 40A (example of second communication device) transmits mail data or the like to the base station apparatus 20 through the normal UL communication. The mail data is transmitted to, for example, the Internet via the base station apparatus 20 and the core network 120.

Here, it is assumed that in the normal UL communication, the base station apparatus 20 applies the proposed technology of the present disclosure to transmit the UL grant even when the transmission buffer of the terminal device 40A is empty. This configuration leads to allocation of uplink resource blocks that are not actually used, to the terminal device 40A by the base station apparatus 20.

Therefore, the number of resource blocks that can be used by the other terminal device 40 is reduced, and transmission opportunities in which the other terminal device 40 is allowed to transmit uplink data are reduced. Therefore, the throughput of the uplink communication in the communication system 1 decreases, and the delay may occur.

Therefore, in the embodiment of the present disclosure, the base station apparatus 20 performs uplink communication to which the proposed technology of the present disclosure is applied, for the terminal device 40B that performs the real-time UL communication, and performs normal uplink communication for the terminal device 40A that performs the normal UL communication.

In other words, even when the transmission buffer of the terminal device 40B that performs the real-time UL communication is empty, the base station apparatus 20 allocates the resources to the terminal device 40B and transmits the UL grant. Meanwhile, when the transmission buffer of the terminal device 40A that performs the normal UL communication is empty, the base station apparatus 20 stops the allocation of the resources to the terminal device 40A and the transmission of the UL grant until the scheduling request is transmitted from the terminal device 40A.

This configuration makes it possible for the base station apparatus 20 to suppress a decrease in the throughput of the entire uplink communication while suppressing a delay in the uplink communication of data for which the real-time is required.

For example, in the embodiment of the present disclosure, the base station apparatus 20 can distinguish whether the proposed technology of the present disclosure is to be applied to each bearer established for each terminal device 40 to distinguish between the terminal device 40B that performs the real-time UL communication and the terminal device 40A that performs the normal UL communication.

For example, the base station apparatus 20 establishes a default bearer to which the proposed technology of the present disclosure is applied or a default bearer to which the proposed technology of the present disclosure is not applied, for each terminal device 40. Alternatively, when the real-time UL communication is performed, the base station apparatus 20 may establish a dedicated bearer to which the proposed technology of the present disclosure is applied. Hereinafter, the default bearer and the dedicated bearer will be described in detail.

### <3.2.1. Method of using default bearer>

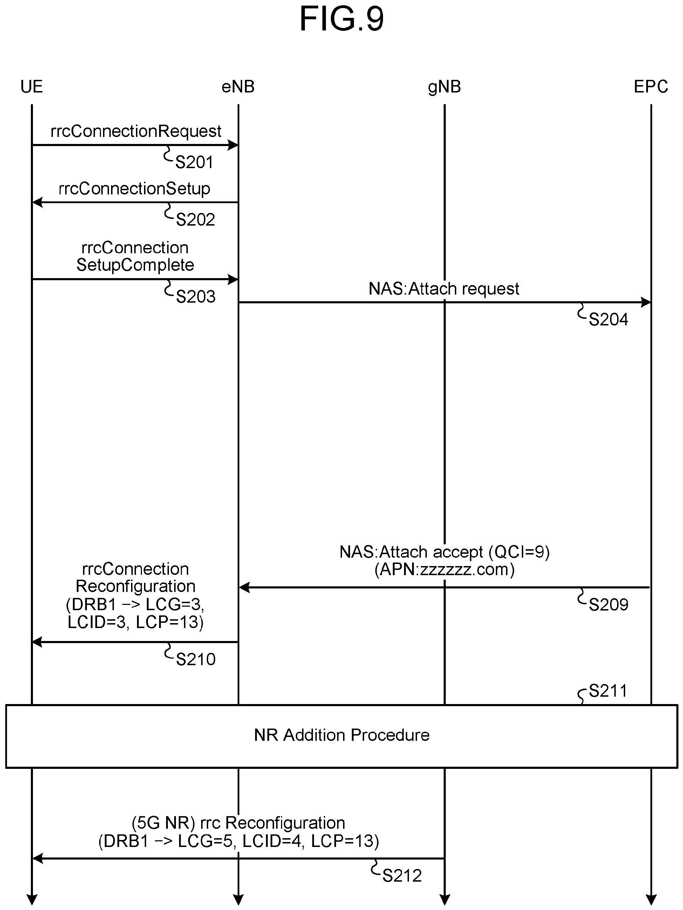

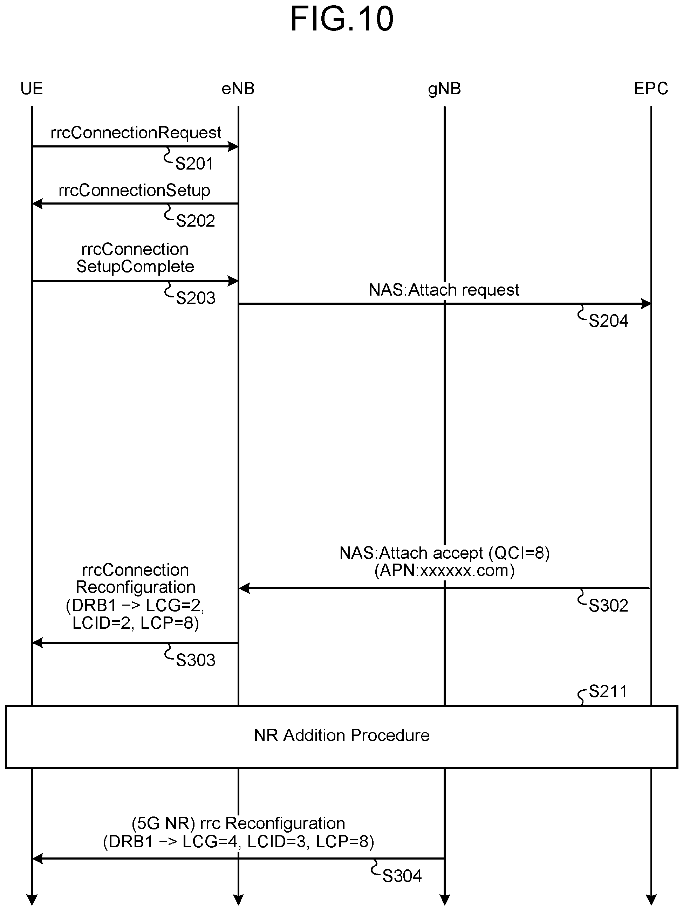

First, a description will be made of a method in which the base station apparatus 20 establishes a default bearer to which the proposed technology of the present disclosure is applied or a default bearer to which the proposed technology of the present disclosure is not applied, for each terminal device 40, with reference to FIGS. 9 and 10. FIG. 9 is a sequence diagram illustrating an establishment process of establishing a default bearer for normal UL communication according to an embodiment of the present disclosure. The terminal device 40A illustrated in FIG. 8 performs the establishment process illustrated in FIG. 9, for the base station apparatus 20.

In FIG. 9, it is assumed that the terminal device 40A performs the establishment process in a non-stand-alone (NSA) mode. Furthermore, in FIG. 9, the terminal device 40A is described as user equipment (UE), a base station apparatus 20 for LTE is described as an evolved NodeB (eNB), a base station apparatus 20 for NR is described as a gNodeB (gNB), and the core network 120 in LTE is described as EPC.

As illustrated in FIG. 9, the UE transmits a connection request signal (rrcConnectionRequest) to the eNB (Step S201). Meanwhile, the eNB transmits rrcConnectionSetup including cell setting information and the like for connection establishment to the UE (Step S202). The UE having been received rrcConnectionSetup transitions to an RRC connection state, and transmits rrcConnectionSetupComplete to the eNB (Step S203). Note that an attach request of a NAS message is included in rrcConnectionSetupComplete.

The eNB transfers the attach request included in Step S203 to the EPC (Step S204). The EPC transmits Attach accept to the UE via the eNB and transmits information about the default bearer (Step S209).

The information includes information about an access point name (APN). In the example of FIG. 9, the eNB transmits "zzzzzz.com" as APN. The "zzzzzz.com" is APN usually used for the normal UL communication.

In addition, Attach accept includes priority class information (e.g., QoS class identifier (QCI)) about the default bearer to be established. The EPC specifies QCI = 9 as the QCI for the normal UL communication.

The eNB transmits rrcConnection Reconfiguration to the UE (Step S210). Furthermore, rrcConnection Reconfiguration includes Attach Accept of the NAS message. In this Reconfiguration, LogicalChannelGroup (LCG) = 3, LogicalChannelIdentity (LCID) = 3, and LogicalChannel priority (LCP) = 13 are set for a data radio bearer 1 (DRB 1) as the default bearer. LCG, LCID, and LCP are priorities in uplink communication defined in a MAC layer. Note that the priorities defined here are priorities in 4G (LTE) .

The UE performs additional processing (NR addition procedure) for connection to the gNB in NR (Step S211). The gNB transmits rrc Reconfiguration in 5G NR to the UE via the eNB (Step S212). In this Reconfiguration, LCG = 5, LCID = 4, and LCP = 13 are set for the DRB 1 as the default bearer. Note that the priorities defined here are priorities in 5G (NR).

Next, FIG. 10 is a sequence diagram illustrating an establishment process of establishing a default bearer for real-time UL communication according to an embodiment of the present disclosure. The terminal device 40B illustrated in FIG. 8 performs the establishment process illustrated in FIG. 10, for the base station apparatus 20.

In FIG. 10, it is assumed that the terminal device 40B performs the establishment process in the non-stand-alone (NSA) mode. Furthermore, in FIG. 10, the terminal device 40B is described as user equipment (UE), a base station apparatus 20 for LTE is described as an evolved NodeB (eNB), a base station apparatus 20 for NR is described as a gNodeB (gNB), and the core network 120 in LTE is described as EPC. In addition, the same process steps as those of FIG. 9 are denoted by the same reference numerals, and the descriptions thereof will be omitted.

As illustrated in FIG. 10, the EPC transmits Attach accept to the UE via the eNB and transmits information about the default bearer (Step S302). The information includes information about an access point name (APN). In the example of FIG. 10, the eNB transmits "xxxxxx.com" as the APN. The "xxxxxx.com" is APN used for the real-time UL communication.

As described above, the EPC specifies "zzzzzz.com" as the APN used for the normal UL communication. Meanwhile, the EPC specifies "xxxxxx.com" as the APN used for the real-time UL communication. In this way, different APNs are assigned for the real-time UL communication that transmits data by using a real-time service and the normal UL communication that transmits data by using a service other than the real-time service.

In addition, in Step S302, Attach accept includes the priority class information (e.g., QCI) about the default bearer to be established. The EPC specifies QCI = 8 as the QCI for the normal UL communication.

Here, the smaller the value of the QCI, the higher the priority. The EPC assigns different priorities for the respective APNs. The EPC sets the priority of the real-time UL communication higher than that of the normal UL communication.

The eNB transmits rrcConnection Reconfiguration to the UE (Step S303). In the reconfiguration, LCG = 2, LCID = 2, and LCP = 8 are set for the DRB 1 as the default bearer. Note that the priorities defined here are priorities in 4G (LTE).

After additional processing for connection of the UE to the gNB of the NR is performed in Step S211, the gNB transmits rrc Reconfiguration in 5G NR to the UE via the eNB (Step S304). In the reconfiguration, LCG = 4, LCID = 3, and LCP = 8 are set for the DRB 1 as the default bearer. Note that the priorities defined here are priorities in 5G (NR) .

Here, the smaller the values of LCG, LCID, and LCP, the higher the priority. The eNB and the gNB assign different priorities for the respective APNs. The eNB and the gNB each set the priority of the real-time UL communication higher than that of the normal UL communication.

In this way, the core network 120 sets the APNs of the terminal device 40 as a target to use a service, for the respective services (e.g., real-time services and other services) to distinguish the terminal device 40 for the respective services.

Distinction of the setting of the DRB 1 associated with the QCI for each service makes it possible for the base station apparatus 20 to distinguish whether to apply the proposed technology of the present disclosure, further achieving priority scheduling according to the QCI.

### <3.2.2. Method of using dedicated bearer>

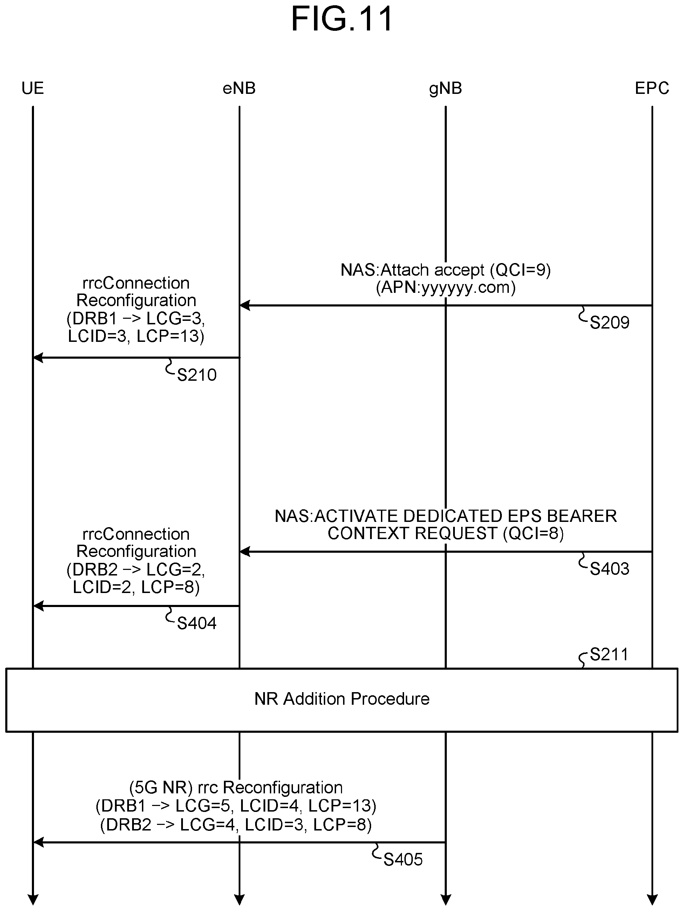

FIG. 11 is a sequence diagram illustrating an establishment process of establishing a default bearer and a dedicated bearer for real-time UL communication according to an embodiment of the present disclosure. The terminal device 40B illustrated in FIG. 8 performs the establishment process illustrated in FIG. 11, for the base station apparatus 20.

In FIG. 11, it is assumed that the terminal device 40B performs the establishment process in the non-stand-alone (NSA) mode. Furthermore, in FIG. 11, the terminal device 40B is described as user equipment (UE), a base station apparatus 20 for LTE is described as an evolved NodeB (eNB), a base station apparatus 20 for NR is described as a gNodeB (gNB), and the core network 120 in LTE is described as EPC.

First, the UE establishes a default bearer in Steps S209 and S210. Such processing steps are the same as the processing steps illustrated in FIG. 9, and thus the descriptions thereof will be omitted. Note that in FIG. 11, the UE performs the establishment process from Step S209, but it is assumed that the UE performs the processing of Steps S201 to S204 illustrated in FIG. 9 as well.

In this way, the UE first establishes a communication bearer used for the normal UL communication as the default bearer (DRB 1). Note that in the example of FIG. 11, the EPC specifies "yyyyyy.com" as the APN.

Next, the EPC transmits ACTIVATE DEDICATED EPS BEARER CONTEXT REQUEST of the NAS message to the UE via the eNB, and transmits information about the dedicated bearer (Step S403).

ACTIVATE DEDICATED EPS BEARER CONTEXT REQUEST includes the priority class information (e.g., QCI) about the dedicated bearer to be established. The EPC specifies QCI = 8 as the QCI for the real-time UL communication.

Here, the EPC can specify a port (UL destination port) used for the real-time UL communication. For example, the EPC specifies UL Destination Port = 50,000 as the UL destination port. In this case, all the uplink communication of the service using the UL Destination Port = 50,000 is processed by the dedicated bearer. Specifying the port number in this manner makes it possible for the UE and the eNB to distinguish between the real-time UL communication and the normal UL communication.

The eNB transmits rrcConnection Reconfiguration to the UE (Step S404). In this Reconfiguration, LCG = 2, LCID = 2, and LCP = 8 are set for DRB 2 (Data Radio Bearer 2) as the dedicated Bearer. Note that the priorities defined here are priorities in 4G (LTE).

After additional processing for connection of the UE to the gNB of the NR is performed in Step S211, the gNB transmits rrc Reconfiguration in 5G NR to the UE via the eNB (Step S405). In the reconfiguration, LCG = 5, LCID = 4, and LCP = 13 are set for DRB 1 as the default bearer, and LCG = 4, LCID = 3, and LCP = 8 are set for the DRB 2 as the dedicated bearer. Note that the priorities defined here are priorities in 5G (NR).

In this manner, the terminal device 40 establishes the default bearer used for the normal UL communication and the dedicated bearer used for the real-time UL communication. This configuration makes it possible for the communication system 1 to distinguish between the real-time UL communication and the normal UL communication, for each communication bearer. In addition, establishing both the default bearer and the dedicated bearer makes it possible for the terminal device 40 to perform both the normal UL communication and the real-time UL communication.

Note that, here, establishing the dedicated bearer after establishment of the default bearer by the terminal device 40, for connection to 5G NR is exemplified, but the present disclosure is not limited thereto. For example, the terminal device 40 may establish the dedicated bearer upon performing the uplink communication by using the real-time service while performing the normal UL communication by establishing the default bearer. In other words, the terminal device 40 establishes the default bearer and is connected to the base station apparatus 20 beforehand. Then, the terminal device 40 may establish the dedicated bearer after an application that performs the uplink communication by using the real-time service such as a video distribution application is activated.

Note that, here, the terminal devices 40 perform the establishment process in the non-stand-alone mode, but the present disclosure is not limited thereto. The terminal device 40 may perform the establishment process in a standalone mode.

### <3.3. Communication process>

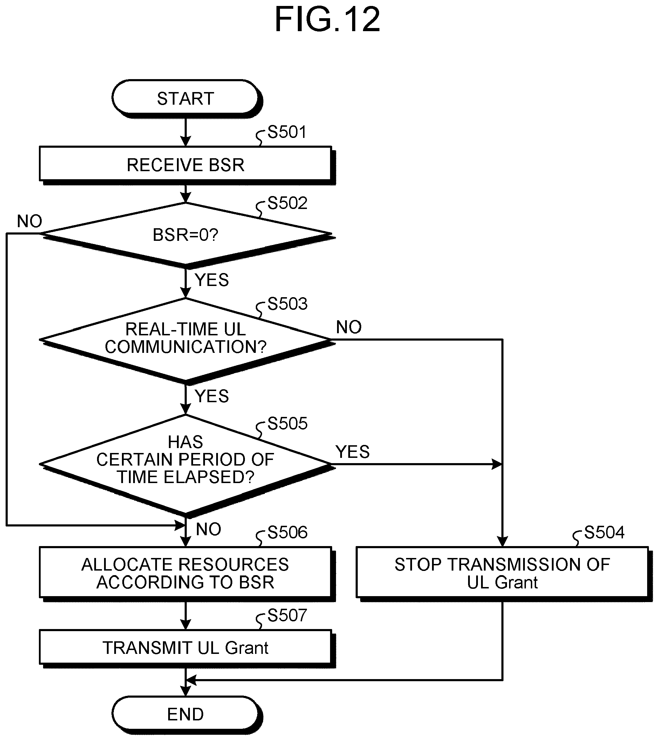

FIG. 12 is a flowchart illustrating an example of a communication process according to an embodiment of the present disclosure. The communication process illustrated in FIG. 12 is performed, for example, in the base station apparatus 20. For example, the base station apparatus 20 repeatedly performs the communication process illustrated in FIG. 12, during uplink communication with the terminal device 40.

As illustrated in FIG. 12, the base station apparatus 20 receives BSR from the terminal device 40 (Step S501). Next, the base station apparatus 20 determines whether the received BSR is BSR = 0 (Step S502). When the received BSR is not BSR = 0 (Step S502; No), the base station apparatus 20 proceeds to Step S506.

When the received BSR is BSR = 0 (Step S502; Yes), the base station apparatus 20 determines whether the uplink communication with the terminal device 40 is real-time UL communication (Step S503).

When the uplink communication with the terminal device 40 is not the real-time UL communication (Step S503; No), the base station apparatus 20 stops transmission of the UL grant to the terminal device 40 (Step S504).

When the uplink communication with the terminal device 40 is the real-time UL communication (Step S503; Yes), the base station apparatus 20 determines whether the certain period of time has elapsed from the first reception of the periodic BSR having BSR = 0 (Step S505).

When the certain period of time has elapsed (Step S505; Yes), the base station apparatus 20 proceeds to Step S504 and stops the transmission of the UL grant to the terminal device 40.

When the certain period of time has not elapsed (Step S505; No), the base station apparatus 20 allocates resources to the terminal device 40 according to the BSR (Step S506). The base station apparatus 20 transmits the UL grant including the information about the allocated resources to the terminal device 40 (Step S507).

### <<4. Other embodiments>>

The embodiments and modifications described above are merely examples, and various alterations and applications can be made.

Control devices that control the base station apparatus 20 and the terminal device 40 according to the present embodiment may each be implemented by a dedicated computer system or a general-purpose computer system.

For example, communication programs for performing the operations described above are stored in a computer-readable recording medium such as an optical disk, semiconductor memory, magnetic tape, or flexible disk, for distribution. Then, for example, the programs are installed on a computer to perform the processes described above, and thereby the control devices are configured. In this configuration, the control devices may be devices (e.g., personal computers) outside the base station apparatus 20 and the terminal device 40. Furthermore, the control devices may be devices (e.g., the control unit 24 and the control unit 45) inside the base station apparatus 20 and the terminal device 40.

Furthermore, the communication programs described above may be stored in a disk device of a server device on a network such as the Internet, for example, so as to be downloaded to the computer. Furthermore, the functions described above may be implemented by cooperation between an operating system (OS) and application software. In this configuration, the other portion than the OS may be stored in a medium so as to be distributed, or the other portion than the OS may be stored in the server device, for example, so as to be downloaded to the computer.

Furthermore, of the processes described in the above embodiments, all or some of the processes described to be performed automatically may be performed manually, or all or some of processes described to be performed manually may be performed automatically by a known method. In addition, the process procedures, specific names, and information including various data and parameters, which are described in the above description or illustrated in the drawings, can be appropriately changed unless otherwise specified. For example, various information illustrated in the drawings are not limited to the illustrated information.

Furthermore, the component elements of the devices are illustrated as functional concepts but are not necessarily required to be physically configured as illustrated. In other words, specific forms of distribution or integration of the devices are not limited to those illustrated, and all or some of the devices may be configured by being functionally or physically distributed or integrated in appropriate units, according to various loads or usage conditions. Note that the configuration obtained by the distribution or integration may be formed dynamically.

Furthermore, the embodiments described above can be appropriately combined within a range consistent with the contents of the processing. Furthermore, the order of the steps illustrated in each of the flowchart and sequence diagrams of the embodiments described above can be changed appropriately.

Furthermore, for example, the present embodiment can be implemented as all configurations constituting the devices or the system, such as a processor as a system Large Scale Integration (LSI) or the like, a module using a plurality of processors or the like, a unit using a plurality of modules or the like, and a set (i.e., configuration of part of the device) obtained by further adding other functions to the unit.

Note that, in the present embodiment, the system means an aggregation of a plurality of component elements (devices, modules (components), etc.), and it does not matter whether all the component elements are in the same housing. Therefore, the plurality of devices that is housed in separate housings and connected via a network, and one device including the plurality of modules housed in one housing are both systems.

Furthermore, for example, the present embodiment can adopt a configuration of cloud computing in which one function is shared between the plurality of devices via the network to perform processing by the plurality of devices in cooperation.

### <<5. Conclusion>>

Although the embodiments of the present disclosure have been described above, the technical scope of the present disclosure is not limited to the embodiments described above and various alterations can be made without departing from the spirit and scope of the present disclosure. Moreover, the component elements of different embodiments and modifications may be suitably combined with each other.

Furthermore, the effects in the embodiments described herein are merely examples, the present disclosure is not limited to these effects, and other effects may also be provided.

Note that the present technology can also have the following configurations.
(1) A base station apparatus comprising:
   a communication unit that performs uplink communication with a communication device; and
   a control unit that
   acquires a notification that an amount of data stored in a transmission buffer of the communication device is equal to or less than a predetermined amount, and
   allocates, upon acquiring the notification, for a certain period of time, resources for the communication device to transmit a signal to the communication device.
(2) The base station apparatus according to (1), wherein the notification is a buffer status report indicating that the transmission buffer is empty.
(3) The base station apparatus according to (1) or (2), wherein upon acquiring the notification, the control unit allocates an uplink grant to the communication device.
(4) The base station apparatus according to any one of (1) to (3), wherein upon acquiring the notification, the control unit allocates, to the communication device, the resources smaller than the resources to be allocated when the amount of data stored in the transmission buffer is larger than the predetermined amount.
(5) The base station apparatus according to any one of (1) to (4), wherein the communication device transmits data by using a real-time service.
(6) The base station apparatus according to (5), wherein different APNs are assigned to the communication device, for transmission of the data by using the real-time service and transmission of the data by using a service different from the real-time service.
(7) The base station apparatus according to (6), wherein different priorities are assigned for the different APNs.
(8) The base station apparatus according to any one of (1) to (4), wherein
   the communication unit
   performs communication with a first communication device that transmits data by using a real-time service and a second communication device that transmits data by using a service different from the real-time service, and
   the control unit
   allocates, upon acquiring the notification from the first communication device, for the certain period of time, the resources for the first communication device to transmit a signal to the communication device, and
   stops, upon acquiring the notification from the second communication device, allocation of the resources until receiving a resource request from the second communication device.
(9) The base station apparatus according to (8), wherein different APNs are assigned to the first communication device and the second communication device.
(10) The base station apparatus according to (8) or (9)a, wherein different priorities are assigned to the first communication device and the second communication device.
(11) A communication device comprising
   a control unit that
   transmits, when an amount of data stored in a transmission buffer is equal to or less than a predetermined amount, a notification about the transmission buffer to a base station apparatus, and
   transmits, after transmitting the notification, a signal to the base station apparatus by using resources allocated by the base station apparatus for a certain period of time.
(12) A communication system comprising:
   a base station apparatus; and a communication device, wherein
   the base station apparatus includes:
      a communication unit that communicates with the communication device; and
      a control unit that
      acquires a notification that an amount of data stored in a transmission buffer of the communication device is equal to or less than a predetermined amount, and
      allocates, upon acquiring the notification, resources for the communication device to transmit a signal for a certain period of time, to the communication device, and
      the communication device includes
      a control unit that
      transmits the notification to the base station apparatus, when the amount of data stored in the transmission buffer is equal to or less than the predetermined amount, and
      transmits, after transmitting the notification, the signal to the base station apparatus by using the resources allocated by the base station apparatus for the certain period of time.
(13) A communication method comprising:
   acquiring a notification that an amount of data stored in a transmission buffer of a communication device is equal to or less than a predetermined amount, from the communication device; and
   allocating, upon acquiring the notification, resources for the communication device to transmit a signal for a certain period of time, to the communication device.
(14) A communication method comprising:
   transmitting, when an amount of data stored in a transmission buffer is equal to or less than a predetermined amount, a notification about the transmission buffer to a base station apparatus; and
   transmitting, after transmitting the notification, a signal to the base station apparatus by using resources allocated by the base station apparatus for a certain period of time.

### Reference Signs List

1 COMMUNICATION SYSTEM
20 BASE STATION APPARATUS
21, 41 SIGNAL PROCESSING UNIT
22, 42 STORAGE UNIT
23, 44 NETWORK COMMUNICATION UNIT
24, 45 CONTROL UNIT
40 TERMINAL DEVICE

## Claims

1. A base station apparatus comprising:
a communication unit that performs uplink communication with a communication device; and
a control unit that
acquires a notification that an amount of data stored in a transmission buffer of the communication device is equal to or less than a predetermined amount, and
allocates, upon acquiring the notification, for a certain period of time, resources for the communication device to transmit a signal to the communication device.

2. The base station apparatus according to claim 1, wherein the notification is a buffer status report indicating that the transmission buffer is empty.

3. The base station apparatus according to claim 1, wherein upon acquiring the notification, the control unit allocates an uplink grant to the communication device.

4. The base station apparatus according to claim 1, wherein upon acquiring the notification, the control unit allocates, to the communication device, the resources smaller than the resources to be allocated when the amount of data stored in the transmission buffer is larger than the predetermined amount.

5. The base station apparatus according to claim 1, wherein the communication device transmits data by using a real-time service.

6. The base station apparatus according to claim 5, wherein different APNs are assigned to the communication device, for transmission of the data by using the real-time service and transmission of the data by using a service different from the real-time service.

7. The base station apparatus according to claim 6, wherein different priorities are assigned for the different APNs.

8. The base station apparatus according to claim 1, wherein
the communication unit
performs communication with a first communication device that transmits data by using a real-time service and a second communication device that transmits data by using a service different from the real-time service, and
the control unit
allocates, upon acquiring the notification from the first communication device, for the certain period of time, the resources for the first communication device to transmit a signal to the communication device, and
stops, upon acquiring the notification from the second communication device, allocation of the resources until receiving a resource request from the second communication device.

9. The base station apparatus according to claim 8, wherein different APNs are assigned to the first communication device and the second communication device.

10. The base station apparatus according to claim 8, wherein different priorities are assigned to the first communication device and the second communication device.

11. A communication device comprising
a control unit that
transmits, when an amount of data stored in a transmission buffer is equal to or less than a predetermined amount, a notification about the transmission buffer to a base station apparatus, and
transmits, after transmitting the notification, a signal to the base station apparatus by using resources allocated by the base station apparatus for a certain period of time.

12. A communication system comprising:
a base station apparatus; and a communication device, wherein
the base station apparatus includes:
a communication unit that communicates with the communication device; and
a control unit that
acquires a notification that an amount of data stored in a transmission buffer of the communication device is equal to or less than a predetermined amount, and
allocates, upon acquiring the notification, resources for the communication device to transmit a signal for a certain period of time, to the communication device, and
the communication device includes
a control unit that
transmits the notification to the base station apparatus, when the amount of data stored in the transmission buffer is equal to or less than the predetermined amount, and
transmits, after transmitting the notification, the signal to the base station apparatus by using the resources allocated by the base station apparatus for the certain period of time.

13. A communication method comprising:
acquiring a notification that an amount of data stored in a transmission buffer of a communication device is equal to or less than a predetermined amount, from the communication device; and
allocating, upon acquiring the notification, resources for the communication device to transmit a signal for a certain period of time, to the communication device.

14. A communication method comprising:
transmitting, when an amount of data stored in a transmission buffer is equal to or less than a predetermined amount, a notification about the transmission buffer to a base station apparatus; and
transmitting, after transmitting the notification, a signal to the base station apparatus by using resources allocated by the base station apparatus for a certain period of time.
